# EUROPEAN PATENT APPLICATION

(11) **EP 3 223 188 A1**
(43) Date of publication of application: **27.09.2017**
(21) Application number: 16161567.9
(22) Date of filing: 22.03.2016
(51) Int. Cl.: G06K 9/00, G06T 11/00

(54) **A VEHICLE ENVIRONMENT MAPPING SYSTEM**

(71) Applicant: Autoliv Development AB, 447 83 Vårgårda (SE)
(72) Inventor: NILSSON, Benny, 441 34 Alingsås (SE); FRANDBERG, Vilhelm, 416 62 Göteborg (SE)
(74) Representative: Sandstedt, Jonas Sven James

(57) **Abstract**

The present disclosure relates to a vehicle environment detection system (2) comprising a sensor arrangement (3) with a first sensor arrangement part (3a) comprising a camera device that is arranged to output picture views (16), and a second sensor arrangement part (3b) that comprises at least one other type of environment data input device (4, 5, 6). The vehicle environment detection system (2) further comprises an image transformation unit (15) that is connected to the second sensor arrangement part (3b) and is arranged to transform data from each one of said at least one other type of environment data input devices (4, 5, 6) to corresponding sensor views (29, 30, 31). The first sensor arrangement part (3a) and the image transformation unit (15) are connected to an image handling unit (14) that is arranged to superimpose at least one sensor view (29, 30, 31) with a corresponding picture view (16), and to extract certain desired information from these.

## Description

### DESCRIPTION OF THE DISCLOSURE

The present disclosure relates to a vehicle environment mapping system comprising a sensor arrangement that in turn comprises a first sensor arrangement part and a second sensor arrangement part. The first sensor arrangement part comprises at least one camera device and the second sensor arrangement part comprises at least one other type of environment data input device.

In automotive applications it is desirable to collect vision data in order to detect the surroundings around the vehicle in order to detect and classify objects such as vehicles, pedestrians, speed bumps, lane marking lines traffic lights, road signs and other objects for use by the vehicle operator or automated vehicle systems. Such automated vehicle systems may relate to automatic emergency brakes (AEB), lane keeping assist (LKA) and automated driving (AD).

A variety of discrete systems exist such as for example:
- Global positioning systems, which are used in combination to predefined map information to provide vehicle location information to aid in trip planning and routing.
- Imaging systems which are used to provide vision data for pedestrian or obstacle detection and for lane tracking.
- Radar, sonar and laser based systems such as Lidar which are used to provide obstacle detection and position information relative to detected objects.
- Inter-vehicle and roadside-to-vehicle communication systems, for example so-called vehicle-to-vehicle (V2V) and vehicle-to-x (V2X) systems, use wireless networking providing data exchange.

An integrated approach that uses such discrete systems where a plurality of sensor data is fed into a detection algorithm is described in US 2007/0016372. Here a plurality of sensing systems is used for providing a variety of data related to the vehicle's surroundings or environment to a control unit. However, this does still not provide a sufficiently reliable and detailed view of the surroundings.

It is therefore an object of the present disclosure to provide a vehicle environment detection system that enables a more detailed and reliable view of the surroundings to be obtained than what is possible by means of prior art systems.

Said object is achieved by means of a vehicle environment detection system comprising a sensor arrangement that in turn comprises a first sensor arrangement part and a second sensor arrangement part. The first sensor arrangement part comprises at least one environment data input device in the form of a camera device that is arranged to output picture views, and the second sensor arrangement part comprises at least one other type of environment data input device. The vehicle environment detection system further comprises an image transformation unit connected to the second sensor arrangement part, where the image transformation unit is arranged to transform data from each one of said at least one other type of environment data input devices to corresponding sensor views. The first sensor arrangement part and the image transformation unit are connected to an image handling unit that is arranged to superimpose at least one sensor view with a corresponding picture view, and to extract certain desired information from these.

Said object is also achieved by means of a vehicle environment detection method, where the method comprises:
- Obtaining picture views using at least one camera device.
- Transforming data from at least one environment data input device sensor device to corresponding sensor views.
- Superimposing at least one sensor view with a corresponding picture view.
- Extracting certain desired information from these.

According to an example, the image transformation unit is arranged to form each corresponding sensor view to have the same format as the present picture view.

According to another example, the image transformation unit is arranged to form each corresponding sensor view such that each corresponding sensor view matches at least a major part of the present picture view image pixel by image pixel.

According to another example, the second sensor arrangement part comprises at least one of:
- global positioning systems in combination with a map data arrangement;
- imaging systems which are arranged to provide vision data for pedestrian or obstacle detection, and for lane tracking;
- radar, sonar and/or laser based systems such as Lidar; and
- inter-vehicle and/or roadside-to-vehicle communication systems.

According to another example, the extracted certain desired information comprises data regarding identified/classified objects and coordinates of these identified/classified objects. According to another example, the image handling unit comprises a neural network.

Other examples are disclosed in the dependent claims.

A number of advantages are obtained by means of the present disclosure. Mainly, more positive detections that are identified and classified are acquired.

### BRIEF DESCRIPTION OF THE DRAWINGS

The present disclosure will now be described more in detail with reference to the appended drawings, where:
- Figure 1: shows a schematic top view of an ego vehicle and a target vehicle;
- Figure 2: shows a schematic view of a vehicle environment detection system;
- Figure 3: shows a schematic representation of a picture view;
- Figure 4: shows a schematic representation of a first sensor view;
- Figure 5: shows a schematic representation of a second sensor view;
- Figure 6: shows a schematic representation of a third sensor view; and

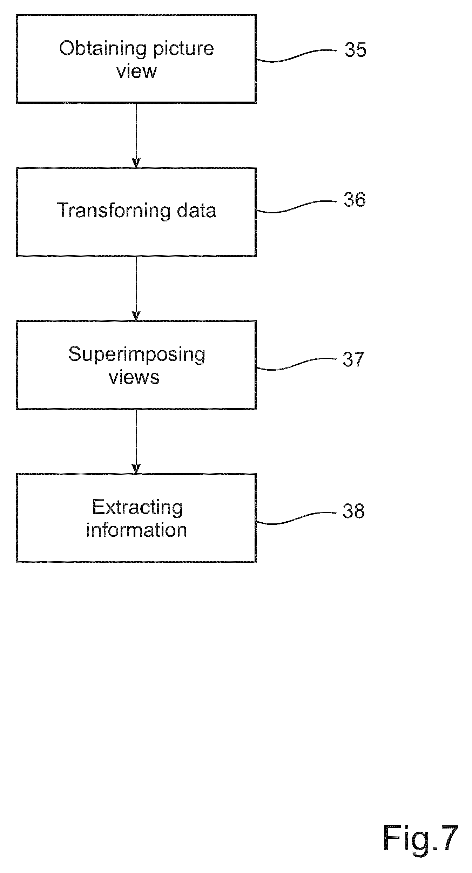

- Figure 7: shows a flowchart for a method according to the present disclosure.

### DETAILED DESCRIPTION

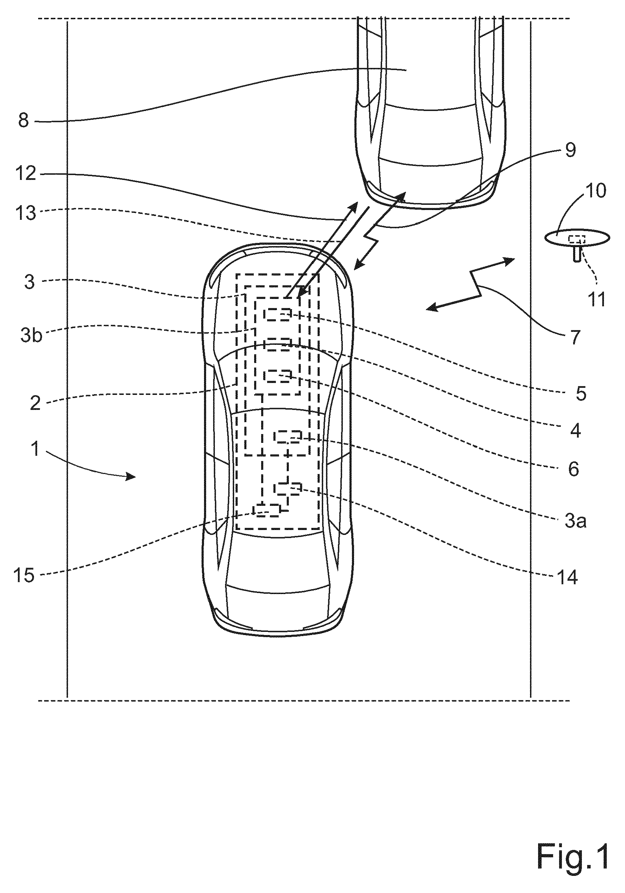

With reference to Figure 1, showing a top view of an ego vehicle 1, the ego vehicle 1 comprises a vehicle environment detection system 2 that in turn comprises a sensor arrangement 3. The sensor arrangement 3 comprises a first sensor arrangement part 3a and a second sensor arrangement part 3b, where the first sensor arrangement part 3a comprises an environment data input device in the form of a camera device.

The second sensor arrangement part 3b comprises a plurality of other types of environment data input devices; a GPS (Global Positioning System) device 4 connected to a predefined map database, a radar arrangement 5 and a vehicle-to-x (V2X) system 6 which is arranged to wirelessly connect to other devices such as corresponding systems in other vehicles, traffic lights, cell phones etc. in order to exchange information with these.

In Figure 1, illustrating an example of V2X communication, a first V2X communication 7 is shown between the ego vehicle 1 and another vehicle 8, and a second V2X communication 9 is shown between the ego vehicle 1 and a road sign 10, where the road sign 10 comprises equipment 11 for V2X communication. Furthermore, the radar arrangement 5 is schematically indicated to transmit signals 12 and to receive reflected signals 13.

It is to be understood that the term V2X comprises many types of communication, for example V2I (vehicle-to-infrastructure), V2V (vehicle to-vehicle) and V2P (vehicle-to-pedestrian).

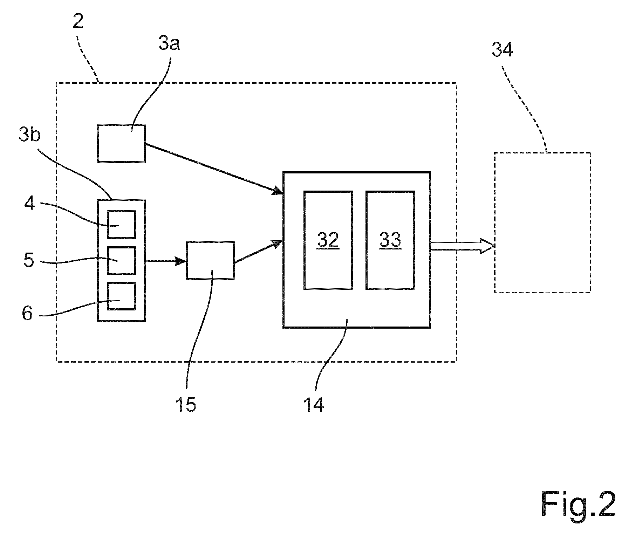

With reference also to Figure 2, schematically indicating the vehicle environment detection system 2, the first sensor arrangement part 3a, i.e. the camera device, is connected to an image handling unit 14 that is arranged to provide a reliable and detailed view of the surrounding environment by means of providing determined data as will be further discussed below.

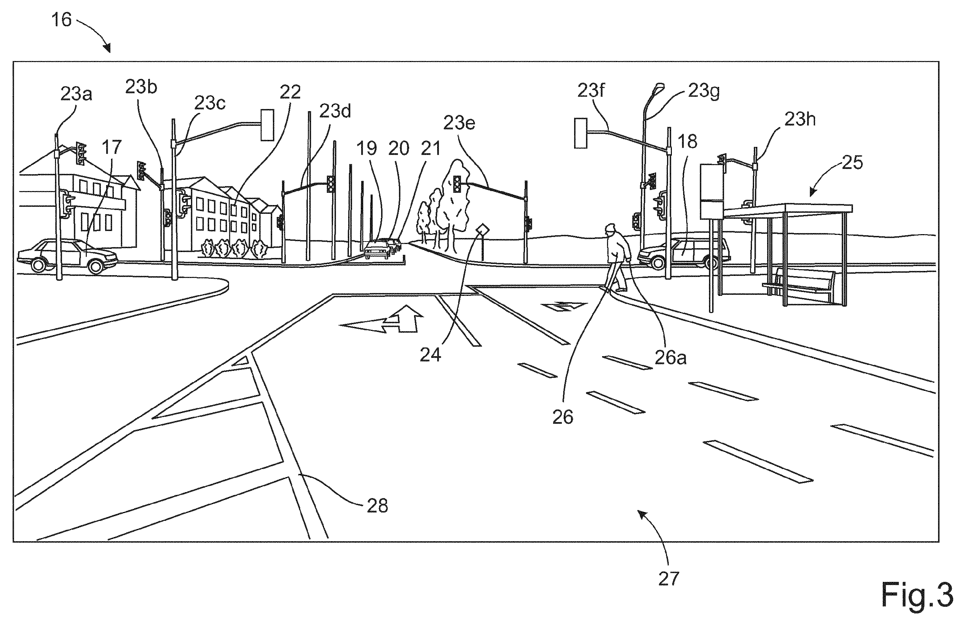

Figure 3 shows a schematic representation of a present picture view 16 of the camera device 3a in a road crossing that is approached by the ego vehicle. At the left there is a partially obscured first target vehicle 17, and at the right there is a partially obscured second target vehicle 18. In front of the ego vehicle, at the other side of the crossing, there is a plurality of vehicles 19, 20, 21 in the meeting lane where only a front third target vehicle 19 is clearly shown.

There are also other objects in the picture view 16 such as for example buildings 22, traffic lights 23a, 23b, 23c, 23d, 23e, 23f, 23g, 23h, a road sign 24, a bus stop shelter 25, a pedestrian 26 carrying a cell phone 26a, available road surface 27 and lane markings 28.

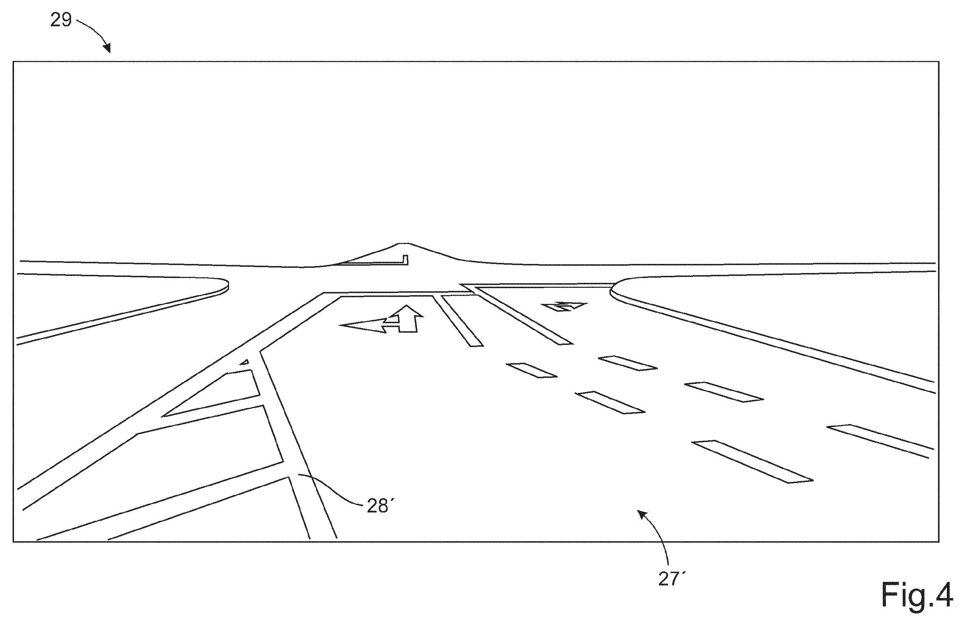

According to the present disclosure, also with reference to Figure 2, the second sensor arrangement part 2b is connected to an image transformation unit 15 that is arranged to transform sensor data from each one of the sensor devices 4, 5, 6 in the second sensor arrangement part 3b to corresponding images or sensor views that correspond to a corresponding picture view of the camera device. That means that for a certain picture view 16 of the camera device, such as for example the one in Figure 3, the image transformation unit 15 is arranged to transform the data from each one of these sensor devices 4, 5, 6 into a corresponding plurality of sensor views 29, 30, 31 as shown in Figure 4, Figure 5 and Figure 6; one for each sensor device 4, 5, 6 in the second sensor arrangement part 2b.

For this example, the sensor views 29, 30, 31 that correspond to the picture view 16 in Figure 3 will now be explained more in detail.

A first sensor view 29 as shown in Figure 4 is acquired from the GPS device 4 connected to a predefined map database, and here available road surface 27' and lane markings 28' are shown. It is to be noted that the lane markings 28' in the first sensor view 29 are broader that the real lane markings 28 in the picture view 16, providing a certain margin of error.

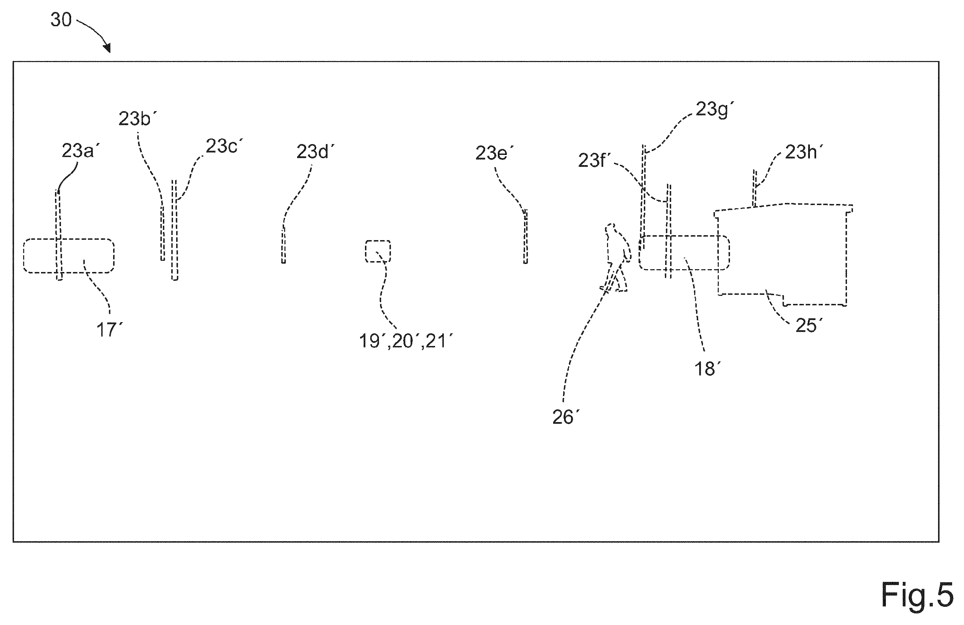

A second sensor view 30 as shown in Figure 5 is acquired from the radar arrangement 5, and here a plurality of targets are detected, and an azimuth angle, distance and relative velocity to these targets are determined by means of the radar arrangement 5 in a well-known manner. For reasons of clarity, only some targets are indicated in Figure 4; the first target vehicle 17', the second target vehicle 18', the plurality of opposing vehicles 19', 20', 21', the traffic lights 23a', 23b', 23c', 23d', 23e', 23f', 23g', 23h', the pedestrian 26' and the bus stop shelter 25'.

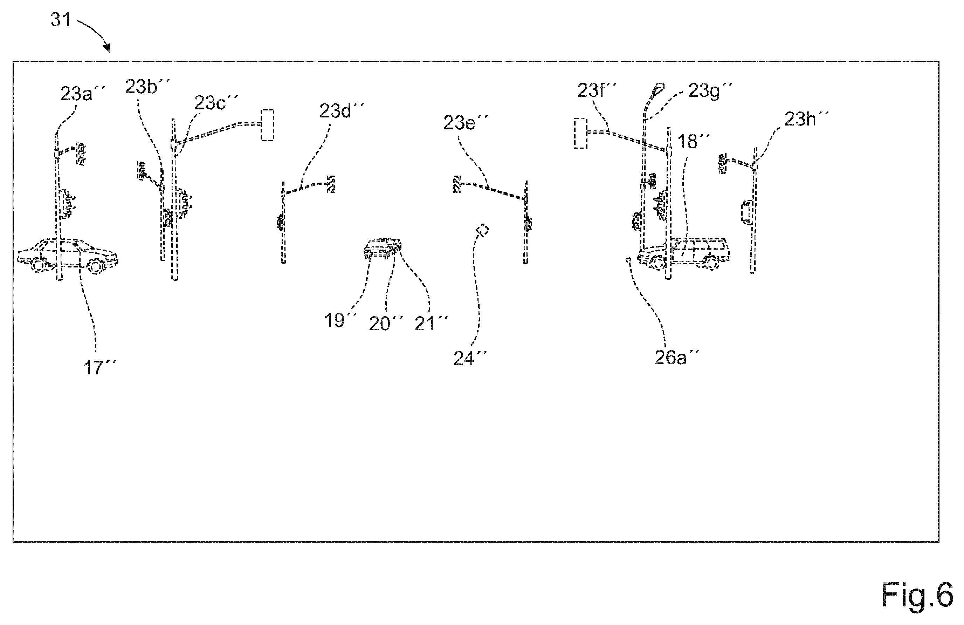

A third sensor view 31 as shown in Figure 6 is acquired from the V2X system 6 that is arranged to establish wireless communication with other objects that also are arranged for V2X communication. In this manner, communication is in this example established with the first target vehicle 17", the second target vehicle 18", each one of the three opposing vehicles 19", 20", 21", the traffic lights 23a", 23b", 23c", 23d", 23e" , 23f", 23g" , 23h", the road sign 24" and the cell phone 26a" that is carried by the pedestrian (not shown here since the pedestrian in himself is not arranged for V2X communication). Some or all target vehicles 17, 18, 19, 20, 21 may exchange information with the ego vehicle 1, for example type of vehicle, GPS data, gyro data, yaw rate data and acceleration sensor data.

Each sensor view 29, 30, 31 matches the picture view 16; according to some aspects, for each picture view 16, the corresponding sensor views 29, 30, 31 have the same format as the picture view 16, and according to some aspects the corresponding sensor views 29, 30, 31 match at least a major part of the picture view 16 image pixel by image pixel. In this example, the corresponding sensor views 29, 30, 31 match the picture view 16 image pixel by image pixel.

The sensor views are projected to the perspective of the picture view, for example a sensor view acquired by means of V2X communication is used for calculating where, for example, a vehicle is positioned relative the ego vehicle. Then it is calculated where in the corresponding picture view the vehicle is positioned. By means of the acquired information it is thus possible to place a detected object at a correct position in a corresponding picture view.

The image transformation unit 15 is also connected to the image handling unit 14, and for a certain present picture view 16 that is transmitted to the image handling unit 14, the corresponding sensor views 29, 30, 31 are also transmitted to the image handling unit 14.

The image handling unit 14 is then arranged to superimpose picture views 16 with the corresponding sensor views 29, 30, 31, and to extract certain desired information from these for a plurality of succeeding picture views acquired during time. Such desired information is in this example in the form of a list with identified objects, and coordinates of these identified objects.

The different sensors data are thus projected to a corresponding camera image perspective, forming at least one image per sensor. The resulting images are then superimposed together with the camera image, the picture view, forming one multichannel image containing data from all sensors including the camera device. The resulting multichannel image is used for classification, detection etc.

In this manner, with reference to the picture view and the sensor views 29, 30, 31 discussed in the example above, all target vehicles 17, 18, 19, 20, 21 are identified and classified as vehicles, and it is determined how many vehicles 20, 21 that are positioned behind the third target vehicle 19. Other objects such as for example the pedestrian 26, the traffic sign 24, the traffic lights 23a, 23b, 23c, 23d, 23e, 23f, 23g, 23h and lane markings 28 are identified and classified. Since all views are in the same format, they are analyzed together as a whole. For example, the pedestrian 26 is identified by means of all sensor views, the mobile phone 26a being used for the third sensor view 31 and the person 26 carrying the mobile phone 26a is identified as a pedestrian by means of the two other sensor views 29, 30.

According to some aspects, the image handling unit 14 and/or the image transformation unit 14 are arranged to apply error tolerances in order to avoid errors, for example the lane markings 28 are, as mentioned previously, made wider than in reality.

According to some aspects, the image handling unit 14 is also arranged to determine possible movement of the identified objects. In this example, traffic lights 23a, 23b, 23c, 23d, 23e, 23f, 23g, 23h are equipped for V2X communication and are arranged to communicate their position, present light configuration, the future light configuration and the time when it is going to change. Correspondingly, by means of the radar arrangement 5, moving targets such as the pedestrian 26 are identified with speed and direction of movement.

In order to enable the image transformation unit 15 to produce sensor views 29, 30, 31 that match the picture views 16 according to the above, the image transformation unit 15 is programmed with predefined camera data, defining the needed camera parameters. Such camera data is for example related to position, orientation and resolution.

Furthermore, according to some aspects, the image transformation unit 15 is connected to a plurality of sensor inputs such as for example GPS data, gyro data, yaw rate data and acceleration sensor data.

The image handling unit 14 is arranged to forward the desired information to control functions 34 such as automatic emergency brakes (AEB), lane keeping assist (LKA) and automated driving (AD). According to some aspects, the image handling unit 14 comprises a so-called neural network 32.

Fortifying data from several sensors 4, 5, 6 are thus transformed into an image perspective coordinate system, i.e. when the sensor images are formed. All images, both sensor views 29, 30, 31 and picture views 16, acquired at a given time are sent to the neural network 32 at the image handling unit 14 as multichannel data. The neural network 32 is arranged to fuse data and to provide determined data by performing detection, identification, classification, localization etc. of objects. The determined data are then transformed to said desired information, for example in the form of a list with identified objects, and coordinates of these identified objects. The image handling unit 14 also comprises a control unit 33 that is arranged to forward the desired information to the control functions 34 as mentioned above.

Superimposing is performed in the image handling unit 14, for example by the control unit 33, by the neural network 32, or in any other suitable manner. Generally, the superimposing is a relatively uncomplicated process, and may be handled in many ways. The image handling unit 14 is in this context to be regarded as covering any suitable means for performing said superimposing.

According to some aspects, the neural network 32 is in the form of a deep neural network, convolutional neural network, or a recurrent neural network. Other types of neural networks are of course conceivable.

The present disclosure provides determined data that have better object detection, classification, localization, regression etc. because of extra data channels from other sources being fed together with the image into the neural network.

For example:
- A very obstructed or otherwise limited/disturbed view of a vehicle might be detected because of extra V2V data.
- Two vehicles next to each other in the image might be correctly identified as two separate vehicles from the extra V2V data.
- A more accurate selection of interesting objects might be identified because of the extra map data.
- LIDAR and radar provide distance information that facilitates separation of objects from the background in picture views.
- Objects that are hard to identify, classify or localize in the image are now correctly identified/classified/localized.

The present disclosure is not limited to the examples above, but may vary freely within the scope of the appended claims. For example, instead of a neural network, other types of computer units may be used in the image handling unit, still obtaining the functionalities and advantages stated above.

The first sensor arrangement part 3a comprises at least one camera device, where each camera device is arranged for capturing images that either are monochrome or with color, and may be active, i.e. equipped with illumination means. Two or more camera devices may be arranged to produce 3-dimensional picture views. A stereo camera may according to some aspects be arranged to perform detection within a region of interest (ROI) using an efficient multi-scale sliding window approach. Classification is then performed using a cascade boosting concept employing features of increasing complexity.

According to some aspects, the camera device comprises a time-of-flight camera (ToF camera), such a camera being arranged to measure the time-of-flight of a light signal between the camera and the subject for each point of the image. According to some aspects, the camera device comprises a structured-light scanning arrangement and a camera, where the structured-light scanning arrangement is adapted to measure three-dimensional object shapes by using projected light patterns and the camera.

Not all picture views have to be processed in the image handling unit 14, and not all picture views have to have corresponding matching sensor views. The present disclosure is directed towards those cases where a picture view has a set of corresponding matching sensor views. These picture views are generally referred to as corresponding picture views, each corresponding picture view having at least one corresponding sensor view.

According to some aspects, V2X communication comprises at least one of type of object, velocity, yaw rate, GPS coordinates, acceleration, direction of movement, status and present meaning. Which type of object that is concerned naturally has a large role regarding what the V2X communication suitably may comprise. In the example with the traffic lights mentioned previously, they may communicate their position, present light configuration, the future light configuration and the time when it is going to change. Correspondingly, road signs may communicate their position and purpose/message.

The first sensor arrangement part 3a comprises at least one environment data input device in the form of a camera device that is arranged to output picture views 16, and the second sensor arrangement part 3b comprises at least one other type of environment data input device 4, 5, 6. The second sensor arrangement part 3b thus comprises at least one such other environment data input device such as for example a GPS device 4 connected to a predefined map database, a radar arrangement 5 and/or a V2X system 6.

It is not necessary to have a predefined map database, according to some aspects adaptive map data is used instead. Such adaptive map data is for example updated continuously, on demand or regularly. Generally, a GPS device 4 is connected to a map data arrangement.

Generally, the present disclosure relates to a vehicle environment detection system 2 comprising a sensor arrangement 3 that in turn comprises a first sensor arrangement part 3a and a second sensor arrangement part 3b, where the first sensor arrangement part 3a comprises at least one environment data input device in the form of a camera device that is arranged to output picture views 16, and the second sensor arrangement part 3b comprises at least one other type of environment data input device 4, 5, 6. The vehicle environment detection system 2 further comprises an image transformation unit 15 connected to the second sensor arrangement part 3b, where the image transformation unit 15 is arranged to transform data from each one of said at least one other type of environment data input devices 4, 5, 6 to corresponding sensor views 29, 30, 31, where the first sensor arrangement part 3a and the image transformation unit 15 are connected to an image handling unit 14 that is arranged to superimpose at least one sensor view 29, 30, 31 with a corresponding picture view 16, and to extract certain desired information from these.

According to an example, the image transformation unit 15 is arranged to form each corresponding sensor view 29, 30, 31 to have the same format as the present picture view 16.

According to an example, the image transformation unit 15 is arranged to form each corresponding sensor view 29, 30, 31 such that each corresponding sensor view 29, 30, 31 matches at least a major part of the present picture view 16 image pixel by image pixel.

According to an example, the second sensor arrangement part 3b comprises at least one of:
- global positioning systems 4 in combination with a map data arrangement;
- imaging systems which are arranged to provide vision data for pedestrian or obstacle detection, and for lane tracking;
- radar 5, sonar and/or laser based systems such as Lidar; and
- inter-vehicle and/or roadside-to-vehicle communication systems.

According to an example, the map data arrangement either comprises a predefined map database or adaptive map data that is updated continuously, on demand or regularly.

According to an example, the extracted certain desired information comprises data regarding identified/classified objects and coordinates of these identified/classified objects.

According to an example, said first sensor arrangement part 3a comprises at least one of:
- means for capturing images that either are monochrome or with color;
- illumination means;
- means for producing 3-dimensional picture views
- a time-of-flight camera,
- a structured-light scanning arrangement and a camera.

According to an example, the image handling unit 14 comprises a neural network 32.

Generally, the present disclosure also relates to a vehicle environment detection method, where the method comprises:
35: obtaining picture views 16 using at least one camera device;
36: transforming data from at least one environment data input device sensor device to corresponding sensor views 29, 30, 31;
37: superimposing at least one sensor view 29, 30, 31 with a corresponding picture view 16; and
38: extracting certain desired information from these.

According to an example, the method comprises forming each corresponding sensor view 29, 30, 31 to have the same format as the corresponding picture view 16.

According to an example, the method comprises forming each corresponding sensor view 29, 30, 31 such that each corresponding sensor view 29, 30, 31 matches at least a major part of the present picture view 16 image pixel by image pixel.

According to an example, said environment data input device sensor uses at least one of:
- global positioning systems 4 in combination with a map data arrangement;
- imaging systems which are used to provide vision data for pedestrian or obstacle detection, and for lane tracking;
- radar 5, sonar and/or laser based systems such as Lidar; and
- inter-vehicle and/or roadside-to-vehicle communication systems.

According to an example, the map data arrangement either uses a predefined map database or adaptive map data that is updated continuously, on demand or regularly.

According to an example, the extracted certain desired information comprises data regarding identified/classified objects and coordinates of these identified/classified objects.

According to an example, at least the step of extracting 38 is performed using a neural network 32.

## Claims

1. A vehicle environment detection system (2) comprising a sensor arrangement (3) that in turn comprises a first sensor arrangement part (3a) and a second sensor arrangement part (3b), where the first sensor arrangement part (3a) comprises at least one environment data input device in the form of a camera device that is arranged to output picture views (16), and the second sensor arrangement part (3b) comprises at least one other type of environment data input device (4, 5, 6), **characterized in that** the vehicle environment detection system (2) further comprises an image transformation unit (15) connected to the second sensor arrangement part (3b), where the image transformation unit (15) is arranged to transform data from each one of said at least one other type of environment data input devices (4, 5, 6) to corresponding sensor views (29, 30, 31), where the first sensor arrangement part (3a) and the image transformation unit (15) are connected to an image handling unit (14) that is arranged to superimpose at least one sensor view (29, 30, 31) with a corresponding picture view (16), and to extract certain desired information from these.

2. The vehicle environment detection system (2) according to claim 1, **characterized in that** the image transformation unit (15) is arranged to form each corresponding sensor view (29, 30, 31) to have the same format as the present picture view (16).

3. The vehicle environment detection system (2) according to any one of the claims 1 or 2, **characterized in that** the image transformation unit (15) is arranged to form each corresponding sensor view (29, 30, 31) such that each corresponding sensor view (29, 30, 31) matches at least a major part of the present picture view (16) image pixel by image pixel.

4. The vehicle environment detection system (2) according to any one of the previous claims, **characterized in that** the second sensor arrangement part (3b) comprises at least one of:
- global positioning systems (4) in combination with a map data arrangement;
- imaging systems which are arranged to provide vision data for pedestrian or obstacle detection, and for lane tracking;
- radar (5), sonar and/or laser based systems such as Lidar; and
- inter-vehicle and/or roadside-to-vehicle communication systems.

5. The vehicle environment detection system (2) according to claim 4, **characterized in that** the map data arrangement either comprises a predefined map database or adaptive map data that is updated continuously, on demand or regularly.

6. The vehicle environment detection system (2) according to any one of the previous claims, **characterized in that** the extracted certain desired information comprises data regarding identified/classified objects and coordinates of these identified/classified objects.

7. The vehicle environment detection system (2) according to any one of the previous claims, **characterized in that** said first sensor arrangement part (3a) comprises at least one of:
- means for capturing images that either are monochrome or with color;
- illumination means;
- means for producing 3-dimensional picture views
- a time-of-flight camera,
- a structured-light scanning arrangement and a camera.

8. The vehicle environment detection system (2) according to any one of the previous claims, **characterized in that** the image handling unit (14) comprises a neural network (32).

9. A vehicle environment detection method, where the method comprises:
(35) obtaining picture views (16) using at least one camera device;
**characterized in that** the method further comprises:
(36) transforming data from at least one environment data input device sensor device to corresponding sensor views (29, 30, 31);
(37) superimposing at least one sensor view (29, 30, 31) with a corresponding picture view (16); and
(38) extracting certain desired information from these.

10. The method according to claim 9, **characterized in that** the method comprises forming each corresponding sensor view (29, 30, 31) to have the same format as the corresponding picture view (16).

11. The method according to any one of the claims 9 or 10, **characterized in that** the method comprises forming each corresponding sensor view (29, 30, 31) such that each corresponding sensor view (29, 30, 31) matches at least a major part of the present picture view (16) image pixel by image pixel.

12. The method according to any one of the claims 9-11, **characterized in that** said environment data input device sensor uses at least one of:
- global positioning systems (4) in combination with a map data arrangement;
- imaging systems which are used to provide vision data for pedestrian or obstacle detection, and for lane tracking;
- radar (5), sonar and/or laser based systems such as Lidar; and
- inter-vehicle and/or roadside-to-vehicle communication systems.

13. The method according to claim 12, **characterized in that** the map data arrangement either uses a predefined map database or adaptive map data that is updated continuously, on demand or regularly.

14. The method according to any one of the claims 9-13, **characterized in that** the extracted certain desired information comprises data regarding identified/classified objects and coordinates of these identified/classified objects.

15. The method according to any one of the claims 9-14, **characterized in that** at least the step of extracting (38) is performed using a neural network (32).
